# EUROPÄISCHE PATENTSCHRIFT

(11) **EP 4 367 485 B1**
(45) Veröffentlichungstag und Bekanntmachung des Hinweises auf die Patenterteilung: **21.01.2026**
(21) Anmeldenummer: 22755075.3
(22) Anmeldetag: 01.07.2022
(51) Int. Cl.: G01F 23/00

(54) **SENSORVORRICHTUNG ZUR ERFASSUNG VON DEN FÜLLSTAND EINES MEDIUMS IN EINEM BEHÄLTER BESCHREIBENDEN SENSORINFORMATIONEN**
SENSOR DEVICE FOR DETERMINING INFORMATION CHARACTERIZING THE LEVEL OF A MEDIUM IN A CONTAINER
DISPOSITIF CAPTEUR POUR DÉTERMINER DES INFORMATIONS CARACTÉRISANT LE NIVEAU D'UN MILIEU DANS UN CONTENEUR

(30) Priorität: 05.07.2021 DE 102021117316
(43) Veröffentlichungstag der Anmeldung: 15.05.2024
(73) Patentinhaber: BEDIA Motorentechnik GmbH & Co. KG, 90518 Altdorf (DE)
(72) Erfinder: KETTLER, Gernot, Altdorf (DE); SCHMIDT, Daniel, Altdorf (DE)
(74) Vertreter: Hafner & Kohl PartmbB
(86) Internationale Anmeldenummer: PCT/EP2022/068310
(87) Internationale Veröffentlichungsnummer: WO 2023/280719

(56) Entgegenhaltungen:
- WO-A1-2004/008820
- WO-A1-2020/104167
- DE-A1- 102011 075 698
- DE-A1- 102015 122 177
- DE-U1- 202017 101 790
- US-A1- 2019 063 648

## Beschreibung

Die Erfindung betrifft eine Sensorvorrichtung zur Erfassung von den Füllstand eines Mediums in einem Behälter beschreibenden Sensorinformationen, umfassend eine Gehäuseeinrichtung und eine an der Gehäuseeinrichtung befestigbare oder befestigte Sensoreinrichtung zur Erfassung von den Füllstand eines Mediums in einem Behälter beschreibenden Sensorinformationen. Entsprechende Sensorvorrichtungen zur Erfassung von den Füllstand eines Mediums in einem Behälter beschreibenden Sensorinformationen sind aus dem Stand der Technik in einer Vielzahl an unterschiedlichen Ausführungsformen dem Grunde nach bekannt, so zum Beispiel aus DE 20 2017 101790 U1, WO 2004/008820 A1 oder US 2019/063648 A1.

Die Grundkonfiguration entsprechender Sensorvorrichtungen umfasst typischerweise eine Gehäuseeinrichtung und eine an der Gehäuseeinrichtung befestigbare oder befestigte, z. B. sondenartige bzw. -förmige, Sensoreinrichtung zur Erfassung von den Füllstand eines Mediums in einem Behälter beschreibenden Sensorinformationen.

Die Längenabmessungen entsprechender Sensoreinrichtungen können bisweilen beträchtlich sein, um auch in großen und entsprechend tiefen Behältern eine zuverlässige Erfassung entsprechender Füllstandsinformationen sicherzustellen. Konkret können entsprechende Sensoreinrichtungen daher z. B. eine Länge von 15 cm oder mehr aufweisen.

Die Längenabmessungen entsprechender Sensoreinrichtungen stellen jedoch eine Herausforderung für die Stabilität der Befestigung jeweiliger Sensoreinrichtungen an jeweiligen Gehäuseeinrichtungen dar, als auf die Sensoreinrichtungen erhebliche Kräfte bzw. Momente wirken können. Dies gilt insbesondere vor dem Hintergrund möglicher räumlich eingeschränkter zur Verfügung stehender Querschnitte.

Bekannte Befestigungsprinzipien sind hier verbesserungs- bzw. weiterentwicklungswürdig, als diese typischerweise nur ein einfaches Verschrauben entsprechender Gehäuseeinrichtungen und Sensoreinrichtungen vorsehen.

Der Erfindung liegt demnach die Aufgabe zugrunde, eine, insbesondere im Hinblick auf eine stabile Befestigung der Gehäuseeinrichtung und der Sensoreinrichtung, verbesserte Sensorvorrichtung zur Erfassung von den Füllstand eines Mediums in einem Behälter beschreibenden Sensorinformationen anzugeben.

Die Aufgabe wird durch eine Sensorvorrichtung zur Erfassung von den Füllstand eines Mediums in einem Behälter beschreibenden Sensorinformationen gemäß Anspruch 1 gelöst. Die hierzu abhängigen Ansprüche betreffen mögliche Ausführungsformen der Sensorvorrichtung.

Ein erster Aspekt der Erfindung betrifft eine Sensorvorrichtung zur Erfassung von den Füllstand eines Mediums, wie z. B. eines Gases und/oder eines Feststoffs und/oder einer Flüssigkeit, in einem Behälter, wie z. B. einem Tank, beschreibenden Sensorinformationen. Die Sensorvorrichtung ist sonach zur Erfassung von den Füllstand eines Mediums in einem Behälter beschreibenden Sensorinformationen eingerichtet. Entsprechende Sensorinformationen können z. B. Sensorsignale sein bzw. solche beinhalten, aus welchen sich durch entsprechende Auswertung einen Füllstand eines jeweiligen Mediums in einem jeweiligen Behälter beschreibende Füllstandsinformationen ermitteln lassen. Grundsätzlich denkbar ist auch, dass die Sensorvorrichtung zur Erfassung von chemischen und/oder physikalischen Parametern, wie z. B. elektrischer Parameter, d. h. z. B. der elektrischen Leitfähigkeit, eines Mediums in einem Behälter eingerichtet ist.

Die Sensorvorrichtung umfasst eine Gehäuseeinrichtung und eine an der Gehäuseeinrichtung befestigbare oder befestigte Sensoreinrichtung. Die, z. B. sondenartig bzw. -förmig ausgeführte, Sensoreinrichtung ist zur Erfassung von den Füllstand eines Mediums in einem Behälter beschreibenden Sensorinformationen eingerichtet. Die Sensoreinrichtung umfasst hierfür typischerweise wenigstens ein aktives oder passives Sensorelement, welches eingerichtet ist, entsprechende Sensorinformationen zu erfassen.

Entsprechende Sensorinformationen werden typischerweise über geeignete Verbindungselemente, wie z. B. Signalleitungen, an eine hardware- und/oder softwaremäßig implementierte Auswerteeinrichtung übertragen. Eine entsprechende Auswerteeinrichtung kann eingerichtet sein, entsprechende Sensorinformationen im Hinblick auf den bzw. einen zu ermittelnden Füllstand eines jeweiligen Mediums in einem jeweiligen Behälter auszuwerten. Eine entsprechende Auswerteeinrichtung kann einen Bestandteil einer der Sensorvorrichtung übergeordneten Vorrichtung zur Ermittlung des Füllstands eines Fluids in einem Behälter darstellen.

Sowohl entsprechende Verbindungselemente als auch eine entsprechende Auswerteeinrichtung können zumindest abschnittsweise, gegebenenfalls vollständig, an oder in der Gehäuseeinrichtung angeordnet oder ausgebildet sein. Die Gehäuseeinrichtung kann hierfür mit einem, gegebenenfalls bohrungsartigen, Aufnahmeraum ausgebildet sein bzw. einen solchen umfassen.

Wie sich im Folgenden ergibt, sind die Gehäuseeinrichtung und die Sensoreinrichtung im Hinblick auf eine, gegebenenfalls (beschädigungs- bzw. zerstörungsfrei) lösbare, stabile Befestigungsmöglichkeit der Sensoreinrichtung an der Gehäuseeinrichtung, und umgekehrt, in besonderer Weise konfiguriert:
Die Gehäuseeinrichtung weist einen, gegebenenfalls auch als Befestigungseinrichtung zu bezeichnenden bzw. zu erachtenden, Befestigungsbereich zur Befestigung der Gehäuseeinrichtung an der Sensoreinrichtung, und umgekehrt, auf. Der Befestigungsbereich der Gehäuseeinrichtung ist sonach im Allgemeinen so konfiguriert, um eine mechanisch ausgesprochen stabile Befestigung der Sensoreinrichtung an der Gehäuseeinrichtung, und umgekehrt, zu realisieren. Der Befestigungsbereich der Gehäuseeinrichtung kann an einem flanschartigen Abschnitt der Gehäuseeinrichtung angeordnet oder ausgebildet sein. Die Besonderheit des Befestigungsbereichs der Gehäuseeinrichtung ergibt sich daraus, dass dieser gesonderte geometrisch-konstruktiv bzw. funktional unterschiedlich konfigurierte Befestigungsabschnitte umfasst. Konkret umfasst der Befestigungsbereich einen ersten Befestigungsabschnitt zur Ausbildung einer Gewindeverbindung mit einem korrespondierenden ersten Befestigungsabschnitt der Sensoreinrichtung und einen zu dem ersten Befestigungsabschnitt gesonderten zweiten Befestigungsabschnitt zur Ausbildung einer Kegelpressverbindung, mit einem korrespondierenden zweiten Befestigungsabschnitt der Sensoreinrichtung. Der gehäuseeinrichtungsseitige erste Befestigungsabschnitt ist sonach eingerichtet, mit einem bzw. dem korrespondierenden sensoreinrichtungsseitigen ersten Befestigungsabschnitt unter Ausbildung einer Gewindeverbindung bzw. -befestigung zusammenzuwirken. Der gehäuseeinrichtungsseitige zweite Befestigungsabschnitt ist sonach eingerichtet, mit einem bzw. dem korrespondierenden sensoreinrichtungsseitigen zweiten Befestigungsabschnitt unter Ausbildung der Kegelpressverbindung zusammenzuwirken.

Der Befestigungsbereich der Gehäuseeinrichtung kann an einem Grundkörper der Gehäuseeinrichtung ausgebildet sein. Die Gehäuseeinrichtung kann sonach durch einen, z. B. metallischen, Grundkörper gebildet sein bzw. einen solchen umfassen. Der Grundkörper kann eine zylinderartige bzw. -förmige, d. h. insbesondere eine hohlzylinderartige bzw. -förmige, Grundform aufweisen. Insbesondere kann der Befestigungsbereich der Gehäuseeinrichtung eine zylinderartige bzw. -förmige, d. h. insbesondere eine hohlzylinderartige bzw. -förmige, Grundform aufweisen. Der Grundkörper der Gehäuseeinrichtung kann gegebenenfalls auch als Gehäusekörper bezeichnet bzw. erachtet werden.

Die Sensoreinrichtung weist einen, gegebenenfalls auch als Befestigungseinrichtung zu bezeichnenden bzw. zu erachtenden, Befestigungsbereich zur Befestigung der Sensoreinrichtung an der Gehäuseeinrichtung, und umgekehrt, auf. Der Befestigungsbereich der Sensoreinrichtung ist sonach im Allgemeinen so konfiguriert, um eine mechanisch ausgesprochen stabile Befestigung der Sensoreinrichtung an der Gehäuseeinrichtung, und umgekehrt, zu realisieren. Der Befestigungsbereich der Sensoreinrichtung kann an einem flanschartigen Abschnitt der Sensoreinrichtung angeordnet oder ausgebildet sein. Die Besonderheit des Befestigungsbereichs der Sensoreinrichtung ergibt sich - analog dem Befestigungsbereich der Gehäuseeinrichtung - daraus, dass dieser gesonderte geometrisch-konstruktiv bzw. funktional unterschiedlich konfigurierte Befestigungsabschnitte umfasst. Konkret umfasst der Befestigungsbereich einen ersten Befestigungsabschnitt zur Ausbildung einer Gewindeverbindung mit einem korrespondierenden ersten Befestigungsabschnitt der Gehäuseeinrichtung und einen zu dem ersten Befestigungsabschnitt gesonderten zweiten Befestigungsabschnitt zur Ausbildung einer Kegelpressverbindung, mit einem korrespondierenden zweiten Befestigungsabschnitt der Gehäuseeinrichtung. Der sensoreinrichtungsseitige erste Befestigungsabschnitt ist sonach eingerichtet, mit einem bzw. dem korrespondierenden gehäuseeinrichtungsseitigen ersten Befestigungsabschnitt unter Ausbildung einer Gewindeverbindung bzw. -befestigung zusammenzuwirken. Der sensoreinrichtungsseitige zweite Befestigungsabschnitt ist sonach eingerichtet, mit einem bzw. dem korrespondierenden gehäuseeinrichtungsseitigen zweiten Befestigungsabschnitt unter Ausbildung der Kegelpressverbindung zusammenzuwirken.

Der Befestigungsbereich der Sensoreinrichtung kann an einem Grundkörper der Sensoreinrichtung ausgebildet sein. Die Sensoreinrichtung kann sonach durch einen, z. B. metallischen oder keramischen, Grundkörper gebildet sein bzw. einen solchen umfassen. Der Grundkörper kann eine zylinderartige bzw. -förmige Grundform aufweisen. Insbesondere kann der Befestigungsbereich der Sensoreinrichtung eine zylinderartige bzw. -förmige Grundform aufweisen. Der Grundkörper der Sensoreinrichtung kann gegebenenfalls auch als Sensorkörper bezeichnet bzw. erachtet werden.

Durch das aufgrund aufeinander abgestimmter Konfigurationen mögliche Zusammenwirken jeweiliger gehäuseeinrichtungsseitiger und sensoreinrichtungsseitiger Befestigungsbereiche, d. h. insbesondere jeweiliger gehäuseeinrichtungsseitiger und sensoreinrichtungsseitiger erster und zweiter Befestigungsabschnitte, lässt sich eine Kombination einer Gewinde- und einer Pressbefestigung, d. h. insbesondere einer Kegelpressbefestigung, und sonach insgesamt ein kombiniertes Befestigungsprinzip realisieren, was, insbesondere im Vergleich zu einer einfachen Schraubbefestigung, eine sehr stabile Befestigung der Sensoreinrichtung an der Gehäuseeinrichtung, und umgekehrt, ermöglicht. Anhand von Untersuchungen konnte gezeigt werden, dass die Stabilität der Befestigung um Faktor zwei höher liegen kann als bei einer einfachen Schraubbefestigung. Dies kann insbesondere vor dem Hintergrund möglicher räumlich eingeschränkter, zur Verfügung stehender Querschnitte gelten.

Dies gilt insbesondere vor dem Hintergrund, dass die typischerweise stabartige bzw. -förmige Sensoreinrichtung ein Länge zu Durchmesser-Verhältnis von wenigstens 2:1, insbesondere wenigstens 3:1, weiter insbesondere wenigstens 4:1, weiter insbesondere wenigstens 5:1, weiter insbesondere wenigstens 6:1, weiter insbesondere wenigstens 7:1, weiter insbesondere wenigstens 8:1, weiter insbesondere wenigstens 9:1, weiter insbesondere wenigstens 10:1, weiter insbesondere wenigstens 11:1, weiter insbesondere wenigstens 12:1, weiter insbesondere wenigstens 13:1, weiter insbesondere wenigstens 14:1, weiter insbesondere wenigstens 15:1, aufweisen kann. Die Länge der Sensoreinrichtung kann sonach deutlich größer sein als deren Durchmesser, was eine stabile Befestigung, wie eingangs angedeutet, grundsätzlich erschwert. Absolut betrachtet kann die Sensoreinrichtung z. B. eine Länge von wenigstens 15 cm, insbesondere wenigstens 20 cm, weiter insbesondere wenigstens 25 cm, weiter insbesondere wenigstens 30 cm, aufweisen. Durch das vorstehend beschriebene Befestigungsprinzip der hierin beschriebenen Sensorvorrichtung ist eine ausgesprochen stabile Befestigung jedoch auch bei derart schwierigen Befestigungsvoraussetzungen realisierbar.

Durch das aufgrund aufeinander abgestimmter Konfigurationen mögliche Zusammenwirken jeweiliger gehäuseeinrichtungsseitiger und sensoreinrichtungsseitiger Befestigungsbereiche, d. h. insbesondere jeweiliger gehäuseeinrichtungsseitiger und sensoreinrichtungsseitiger erster und zweiter Befestigungsabschnitte, eröffnet auch eine gewisse Variabilität der Stabilität der Befestigung, denn die durch das Zusammenwirken der jeweiligen zweiten Befestigungsabschnitte realisierte Pressverbindung kann gegebenenfalls über das Verschrauben der jeweiligen ersten Befestigungsabschnitte und das damit einhergehende Ineinandergreifen der jeweiligen ersten Befestigungsabschnitte gezielt beeinflusst werden, als die zur Realisierung der Pressverbindung auf die jeweiligen zweiten Befestigungsabschnitte wirkenden Kräfte durch das Anziehen der Schraubbefestigung der jeweiligen ersten Befestigungsabschnitte gezielt beeinflusst werden können.

Insgesamt liegt eine verbesserte Sensorvorrichtung zur Erfassung von den Füllstand eines Mediums in einem Behälter beschreibenden Sensorinformationen vor.

Wie erwähnt, weist die Gehäuseeinrichtung typischerweise einen Grundkörper auf. Der Grundkörper weist eine Symmetrie- oder Zentralachse auf, bei welcher es sich um die bzw. eine Längsachse des Grundkörpers bzw. der Gehäuseeinrichtung handeln kann. Der Befestigungsbereich der Gehäuseeinrichtung kann im Bereich eines freien Endes des Grundkörpers angeordnet oder ausgebildet sein. Hierbei handelt es sich um eine im Hinblick auf die herstellbare bzw. herzustellende Befestigung der Gehäuseeinrichtung an der Sensoreinrichtung, und umgekehrt, praktikable Anordnungsmöglichkeit.

Insbesondere kann der zweite Befestigungsabschnitt des Befestigungsbereichs der Gehäuseeinrichtung im Bereich des freien Endes des Grundkörpers der Gehäuseeinrichtung angeordnet oder ausgebildet sein und der erste Befestigungsabschnitt des Befestigungsbereichs der Gehäuseeinrichtung im Verhältnis zu dem freien Ende in Richtung eines anderen freien Endes versetzt angeordnet oder ausgebildet sein. Mithin ist der zweite Befestigungsabschnitt, typischerweise unmittelbar, am freien Ende des Grundkörpers angeordnet oder ausgebildet. Typischerweise bildet sonach der zweite Befestigungsabschnitt das freie Ende des Grundkörpers der Gehäuseeinrichtung, welches im Montagezustand der Sensorvorrichtung der Sensoreinrichtung zugewandt ist.

Wie ebenso erwähnt, weist auch die Sensoreinrichtung typischerweise einen Grundkörper auf. Der Grundkörper weist eine Symmetrie- oder Zentralachse auf, bei welcher es sich um die bzw. eine Längsachse des Grundkörpers bzw. der Sensoreinrichtung handeln kann. Der Befestigungsbereich der Sensoreinrichtung kann im Bereich eines freien Endes des Grundkörpers angeordnet oder ausgebildet sein. Hierbei handelt es sich um eine im Hinblick auf die herstellbare bzw. herzustellende Befestigung der Sensoreinrichtung an der Gehäuseeinrichtung, und umgekehrt, praktikable Anordnungsmöglichkeit.

Insbesondere kann der erste Befestigungsabschnitt des Befestigungsbereichs der Sensoreinrichtung im Bereich des freien Endes des Grundkörpers der Sensoreinrichtung angeordnet oder ausgebildet sein und der zweite Befestigungsabschnitt des Befestigungsbereichs der Sensoreinrichtung im Verhältnis zu dem freien Ende in Richtung eines anderen freien Endes versetzt angeordnet oder ausgebildet sein. Mithin ist der erste Befestigungsabschnitt, typischerweise unmittelbar, am freien Ende des Grundkörpers angeordnet oder ausgebildet. Typischerweise bildet sonach der erste Befestigungsabschnitt das freie Ende des Grundkörpers der Sensoreinrichtung, welches im Montagezustand der Sensorvorrichtung der Gehäuseeinrichtung zugewandt ist.

Denkbar ist es jedoch auch, dass der Befestigungsbereich der Sensoreinrichtung beabstandet zu einem freien Ende des Grundkörpers der Sensoreinrichtung angeordnet oder ausgebildet ist. Dies gilt insbesondere für Konfigurationen, in welchen die Sensoreinrichtung im Montagezustand der Sensorvorrichtung mit einem freien Ende über den Befestigungsbereich der Gehäuseeinrichtung hinaus weiter in die Gehäuseeinrichtung hineinragt bzw. eintaucht.

Wie erwähnt, sind die jeweiligen ersten Befestigungsabschnitte der Befestigungsbereiche der Gehäuseeinrichtung und der Sensoreinrichtung zur Ausbildung einer Gewindeverbindung bzw. - befestigung eingerichtet. Der erste Befestigungsabschnitt des Befestigungsbereichs der Gehäuseeinrichtung kann sonach durch ein Innengewinde oder einen Innengewindeabschnitt gebildet sein. Der erste Befestigungsabschnitt des Befestigungsbereichs der Sensoreinrichtung kann durch ein, insbesondere korrespondierendes, Außengewinde oder einen korrespondierenden Außengewindeabschnitt gebildet sein. Bei den jeweiligen Innen- bzw. Außengewinden kann es sich gegebenenfalls um Feingewinde handeln.

Wie ebenso erwähnt, sind die jeweiligen zweiten Befestigungsabschnitte der Befestigungsbereiche der Gehäuseeinrichtung und der Sensoreinrichtung zur Ausbildung einer Kegelpressverbindung eingerichtet. Der zweite Befestigungsabschnitt des Befestigungsbereichs der Gehäuseeinrichtung wird durch sich in axialer Richtung bezüglich der bzw. einer Symmetrie- oder Zentralachse der Gehäuseeinrichtung, insbesondere der Symmetrie- oder Zentralachse des Grundkörpers der Gehäuseeinrichtung, aufweitende Kegelflächen gebildet.

Entsprechende Kegelflächen der Gehäuseeinrichtung stellen in einer (längs)geschnittenen Ansicht der Gehäuseeinrichtung sich in axialer Richtung bezüglich der bzw. einer Symmetrie- oder Zentralachse der Gehäuseeinrichtung, insbesondere der Symmetrie- oder Zentralachse des Grundkörpers der Gehäuseeinrichtung, in Richtung des mit dem Befestigungsbereich versehenen Endes der Gehäuseeinrichtung aufweitende Schrägflächen dar.

Der zweite Befestigungsabschnitt des Befestigungsbereichs der Sensoreinrichtung wird durch, insbesondere korrespondierende, sich in axialer Richtung bezüglich der bzw. einer Symmetrie- oder Zentralachse der Sensoreinrichtung, insbesondere der Symmetrie- oder Zentralachse des Grundkörpers der Sensoreinrichtung, zulaufende Kegelflächen gebildet.

Entsprechende Kegelflächen der Sensoreinrichtung stellen in einer (längs)geschnittenen Ansicht der Sensoreinrichtung sich in axialer Richtung bezüglich der bzw. einer Symmetrie- oder Zentralachse der Sensoreinrichtung, insbesondere der Symmetrie- oder Zentralachse des Grundkörpers der Sensoreinrichtung, in Richtung des mit dem Befestigungsbereich versehenen Endes der Sensoreinrichtung zulaufende Schrägflächen dar.

Entsprechende Kegelflächen der zweiten Befestigungsabschnitte des Befestigungsbereichs der Gehäuseeinrichtung und/oder der Sensoreinrichtung können in allen Ausführungsformen auch als Kegelstumpfflächen bezeichnet bzw. erachtet werden.

Der halbe Öffnungswinkel α eines durch entsprechende Kegelflächen definierten Kegels der Gehäuseeinrichtung und/oder der Sensoreinrichtung liegt typischerweise in folgenden Bereich: 0 < α < 90°. Der halbe Öffnungswinkel eines durch entsprechende Kegelflächen definierten Kegels der Gehäuseeinrichtung und/oder der Sensoreinrichtung kann sonach beispielsweis in einem Bereich zwischen 0,1 und 90°, insbesondere in einem Bereich zwischen 4 und 45°, weiter insbesondere in einem Bereich zwischen 10 und 35°, weiter insbesondere in einem Bereich zwischen 15 und 25°, liegen. Die jeweiligen halben Öffnungswinkel der gehäuseeinrichtungsseitigen und sensoreinrichtungsseitigen Kegelflächen sind typischerweise, jedoch nicht zwangsläufig kongruent. Die genannten Winkelbereiche sind fertigungstechnisch gut darstellbar und ermöglichen ausgesprochen stabile Befestigung der Sensoreinrichtung an der Gehäuseeinrichtung, und umgekehrt.

Wie erwähnt, sind die jeweiligen ersten und zweiten Befestigungsabschnitte als jedenfalls in geometrisch-konstruktiver Hinsicht gesonderte Abschnitte der jeweiligen Befestigungsbereiche der Gehäuse- und Sensoreinrichtung zu erachten. Die jeweiligen ersten und zweiten Befestigungsabschnitte eines jeweiligen Befestigungsbereichs sind sonach räumlich voneinander abgrenzbar. In diesem Zusammenhang sind folgende Ausführungsformen beispielhaft denkbar:

Der erste Befestigungsabschnitt des Befestigungsbereichs der Gehäuseeinrichtung kann, insbesondere in axialer Richtung bezüglich der bzw. einer Symmetrie- oder Zentralachse der Gehäuseeinrichtung, insbesondere unmittelbar, an den zweiten Befestigungsabschnitt des Befestigungsbereichs der Gehäuseeinrichtung anschließen. Wie erwähnt, bildet der zweite Befestigungsabschnitt des Befestigungsbereichs der Gehäuseeinrichtung typischerweise das bzw. ein freie(s) Ende der Gehäuseeinrichtung. Gleichermaßen kann der erste Befestigungsabschnitt des Befestigungsbereichs der Sensoreinrichtung, insbesondere in axialer Richtung bezüglich der bzw. einer Symmetrie- oder Zentralachse der Sensoreinrichtung, insbesondere unmittelbar, an den zweiten Befestigungsabschnitt des Befestigungsbereichs der Sensoreinrichtung anschließen. Wie erwähnt, bildet der erste Befestigungsabschnitt des Befestigungsbereichs der Sensoreinrichtung typischerweise das bzw. ein freie(s) Ende der Sensoreinrichtung.

Ebenso ist es denkbar, dass sich der erste Befestigungsabschnitt des Befestigungsbereichs der Gehäuseeinrichtung unter Zwischenschaltung eines sich bezüglich einer Symmetrie- oder Zentralachse der Gehäuseeinrichtung radial nach innen erstreckenden dritten Befestigungsabschnitts an den zweiten Befestigungsabschnitt des Befestigungsbereichs der Gehäuseeinrichtung anschließt. Zwischen dem das freie Ende der Gehäuseeinrichtung bildenden zweiten Befestigungsabschnitt und dem ersten Befestigungsabschnitt kann sonach ein dritter Befestigungsabschnitt angeordnet oder ausgebildet sein. Der dritte Befestigungsabschnitt kann sich um ein gewisses Maß, z. B. um ein Maß aus dem Bereich zwischen 0,01 und 0,1 mm, in radialer Richtung nach innen erstrecken.

Gleichermaßen kann sich der erste Befestigungsabschnitt des Befestigungsbereichs der Sensoreinrichtung unter Zwischenschaltung eines sich bezüglich einer Symmetrie- oder Zentralachse der Sensoreinrichtung radial nach innen erstreckenden dritten Befestigungsabschnitts an den zweiten Befestigungsabschnitt des Befestigungsbereichs der Sensoreinrichtung anschließen. Zwischen dem das freie Ende der Sensoreinrichtung bildenden ersten Befestigungsabschnitt und dem zweiten Befestigungsabschnitt kann sonach ein dritter Befestigungsabschnitt angeordnet oder ausgebildet sein. Der dritte Befestigungsabschnitt kann sich um ein gewisses Maß, z. B. um ein Maß aus dem Bereich zwischen 0,01 und 0,1 mm, in radialer Richtung nach innen erstrecken.

Durch die - analog den jeweiligen ersten und zweiten Befestigungsabschnitten - typischerweise korrespondierenden dritten Befestigungsabschnitte kann gegebenenfalls eine Verliersicherung realisiert sein, welche, etwa im Rahmen der Herstellung der Befestigung, ein unerwünschtes Herausfallen der Sensoreinrichtung aus der Gehäuseeinrichtung verhindert.

Wie erwähnt, kann der Befestigungsbereich der Gehäuseeinrichtung an einem flanschartigen bzw. -förmigen Abschnitt der Gehäuseeinrichtung angeordnet oder ausgebildet sein. Der flanschartige Abschnitt kann, etwa durch eine geeignete Wandstärke(nreduzierung) elastisch-federnde Eigenschaften aufweisen. Derart kann die Montage der Sensorvorrichtung, welche typischerweise durch Einstecken der Sensoreinrichtung in die Gehäuseeinrichtung und Verschrauben der jeweiligen ersten Befestigungsabschnitte erfolgt, vereinfacht werden. Der flanschartige bzw. -förmige Abschnitt kann außenumfangsseitig mit einer Befestigungsschnittstelle zur Befestigung der Gehäuseeinrichtung, gegebenenfalls nebst daran befestigter Sensoreinrichtung, an einer korrespondierenden Befestigungsschnittstelle eines Behälters ausgebildet sein. Bei einer entsprechenden Befestigungsschnittstelle kann es sich z. B. um ein Außengewinde handeln.

Ein zweiter Aspekt der Erfindung betrifft eine Vorrichtung zur Ermittlung des Füllstands eines Mediums in einem Behälter. Die Vorrichtung kann insbesondere eingerichtet sein, den Füllstand, z. B. öliger oder wässriger, Flüssigkeiten, wie z. B. Betriebsflüssigkeiten, eines Fahrzeugs, insbesondere eines Kraftfahrzeugs, oder einer Arbeitsmaschine, insbesondere einer Bau- oder Landmaschine, zu ermitteln.

Die Vorrichtung umfasst eine Sensorvorrichtung gemäß dem ersten Aspekt der Erfindung und eine mit der Sensorvorrichtung kommunizierende hardware- und/oder softwaremäßig implementierte Auswerteeinrichtung, welche zur Auswertung der von der Sensoreinrichtung lieferbaren bzw. gelieferten Sensorinformationen zur Erzeugung einer einen einen aktuellen oder künftigen Füllstand eines Mediums in dem jeweiligen Behälter beschreibenden Füllstandsinformationen eingerichtet ist. Die Auswerteeinrichtung kann eingerichtet sein, entsprechende Füllstandsinformationen auf Grundlage an sich bekannter Messprinzipien, wie z. B. kapazitiver Mesprinzipien, zu erzeugen. Alternativ oder ergänzend kann die Auswerteeinrichtung zur Auswertung der von der Sensoreinrichtung lieferbaren bzw. gelieferten Sensorinformationen zur Erzeugung einer einen chemischen und/oder physikalischen Parameter eines Mediums in dem jeweiligen Behälter beschreibenden Parameterinformationen eingerichtet sein.

Die Auswerteeinrichtung kann ferner eingerichtet sein, eine ein Auswerteergebnis beschreibende Auswerteinformation zu erzeugen und über eine geeignete Ausgabeeinrichtung, wie z. B. eine Anzeigeeinrichtung und/oder eine drahtgebundene oder drahtlose Kommunikationseinrichtung, an einen Nutzer und/oder an ein nutzerseitiges Endgerät auszugeben. Die Vorrichtung kann sonach gegebenenfalls auch eine entsprechende Auswerteinrichtung und/oder Ausgabeeinrichtung umfassen.

Ein dritter Aspekt der Erfindung betrifft die Verwendung einer Vorrichtung gemäß dem zweiten Aspekt zur Ermittlung des Füllstands eines Mediums in einem Behälter. Durch die Verwendung der Vorrichtung kann gleichermaßen ein Verfahren zur Ermittlung des Füllstands eines Mediums in einem Behälter implementiert sein bzw. werden. Die Verwendung der Vorrichtung bzw. das Verfahren kann ebenso einen eigenständigen Aspekt der Erfindung darstellen.

Sämtliche Ausführungen im Zusammenhang mit der Sensorvorrichtung gemäß dem ersten Aspekt der Erfindung gelten analog für die Vorrichtung gemäß dem zweiten Aspekt der Erfindung und/oder für die Verwendung bzw. das Verfahren gemäß dem dritten Aspekt der Erfindung.

Die Erfindung ist anhand von Ausführungsbeispielen in den Zeichnungen nochmals beispielhaft erläutert. Dabei zeigt:

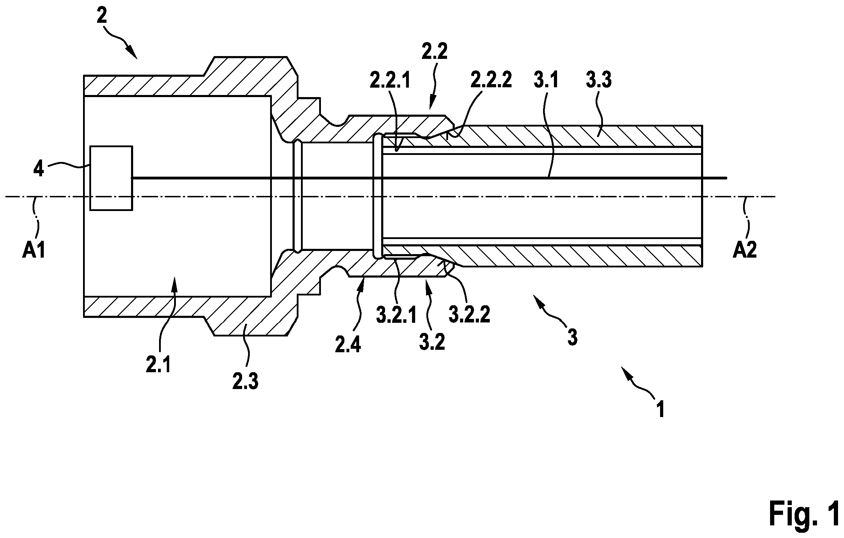

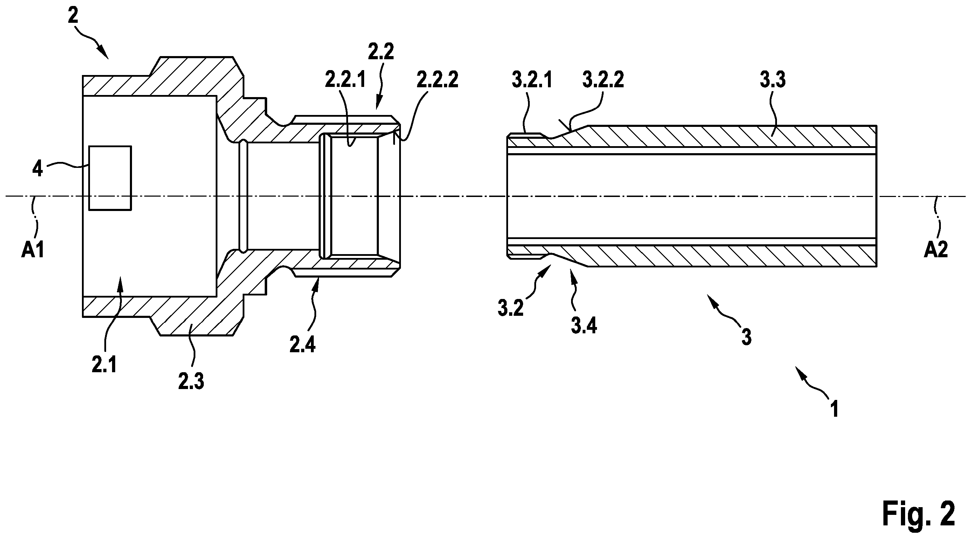

Fig. 1, 2 jeweils eine Prinzipdarstellung einer Sensorvorrichtung gemäß einem Ausführungsbeispiel.

Die Fig. 1 und 2 zeigen jeweils eine Prinzipdarstellung einer Sensorvorrichtung 1 bzw. deren Bestandteile gemäß einem Ausführungsbeispiel in einer längsgeschnittenen Ansicht. Konkret ist jeweils ein Ausschnitt der Sensorvorrichtung 1 gezeigt, welcher für die Erläuterung des hierin beschriebenen Prinzips von Bedeutung ist.

Die Sensorvorrichtung 1 ist zur Erfassung von den Füllstand eines Mediums, wie z. B. eines Gases und/oder eines Feststoffs und/oder einer Flüssigkeit, in einem Behälter (nicht gezeigt) wie z. B. einem Tank, beschreibenden Sensorinformationen eingerichtet. Entsprechende Sensorinformationen können z. B. Sensorsignale sein bzw. solche beinhalten, aus welchen sich durch entsprechende Auswertung einen Füllstand eines jeweiligen Mediums in einem jeweiligen Behälter beschreibende Füllstandsinformationen ermitteln lassen.

Die Sensorvorrichtung 1 umfasst eine Gehäuseeinrichtung 2 und eine an der Gehäuseeinrichtung 2 befestigbare oder befestigte Sensoreinrichtung 3. Die in den Fig. beispielhaft sondenartig bzw. -förmig ausgeführte Sensoreinrichtung 3 ist zur Erfassung von den Füllstand eines Mediums in einem Behälter beschreibenden Sensorinformationen eingerichtet. Die Sensoreinrichtung 3 umfasst hierfür wenigstens ein rein schematisch angedeutetes Sensorelement 3.1, welches eingerichtet ist, entsprechende Sensorinformationen zu erfassen.

Entsprechende Sensorinformationen werden typischerweise über geeignete Verbindungselemente (nicht gezeigt), wie z. B. Signalleitungen, an eine hardware- und/oder softwaremäßig implementierte Auswerteeinrichtung 4 übertragen. Eine entsprechende Auswerteeinrichtung 4 kann eingerichtet sein, entsprechende Sensorinformationen im Hinblick auf den bzw. einen zu ermittelnden Füllstand eines jeweiligen Mediums in einem jeweiligen Behälter auszuwerten. Eine entsprechende Auswerteeinrichtung 4 kann, wie in Fig. 1 rein beispielhaft dargestellt, in einem Aufnahmeraum 2.1 der Gehäuseeinrichtung 2 angeordnet oder ausgebildet sein. Denkbar ist es auch, dass die oder eine entsprechende Auswerteeinrichtung 4 einen Bestandteil einer der Sensorvorrichtung 1 übergeordneten Vorrichtung zur Ermittlung des Füllstands eines Fluids in einem Behälter bildet.

Entsprechende Verbindungselemente wie auch, vgl. Fig. 1, die eine entsprechende Auswerteeinrichtung 4 können an oder in der Gehäuseeinrichtung 2 angeordnet oder ausgebildet sein. Die Gehäuseeinrichtung umfasst hierfür den bereits erwähnten Aufnahmeraum 2.1, welcher z. B. bohrungsartig bzw. -förmig ausgebildet sein kann.

Die Gehäuseeinrichtung 2 und die Sensoreinrichtung 3 sind im Hinblick auf eine, gegebenenfalls (beschädigungs- bzw. zerstörungsfrei) lösbare, stabile Befestigungsmöglichkeit der Sensoreinrichtung 3 an der Gehäuseeinrichtung 2, und umgekehrt, in besonderer Weise konfiguriert:
Die Gehäuseeinrichtung 2 weist einen, gegebenenfalls auch als Befestigungseinrichtung zu bezeichnenden bzw. zu erachtenden, Befestigungsbereich 2.2 zur Befestigung der Gehäuseeinrichtung 2 an der Sensoreinrichtung 3, und umgekehrt, auf. Der Befestigungsbereich 2.2 ist im Allgemeinen konfiguriert, um eine mechanisch ausgesprochen stabile Befestigung der Sensoreinrichtung 3 an der Gehäuseeinrichtung 2, und umgekehrt, zu realisieren. Der Befestigungsbereich 2.2 kann an einem flanschartigen Abschnitt 2.4 der Gehäuseeinrichtung angeordnet oder ausgebildet sein. Die Besonderheit des Befestigungsbereichs 2.2 ergibt sich daraus, dass dieser gesonderte geometrisch-konstruktiv bzw. funktional unterschiedlich konfigurierte Befestigungsabschnitte 2.2.1, 2.2.2 umfasst. Konkret umfasst der Befestigungsbereich 2.2 einen ersten Befestigungsabschnitt 2.2.1 zur Ausbildung einer Gewindeverbindung mit einem korrespondierenden ersten Befestigungsabschnitt 3.2.1 der Sensoreinrichtung 3 und einen zu dem ersten Befestigungsabschnitt 2.2.1 gesonderten zweiten Befestigungsabschnitt 2.2.2 zur Ausbildung einer Kegelpressverbindung, mit einem korrespondierenden zweiten Befestigungsabschnitt 3.2.2 der Sensoreinrichtung 3. Der gehäuseeinrichtungsseitige erste Befestigungsabschnitt 2.2.1 ist sonach eingerichtet, mit einem bzw. dem korrespondierenden sensoreinrichtungsseitigen ersten Befestigungsabschnitt 3.2.2 unter Ausbildung einer Gewindeverbindung bzw. -befestigung zusammenzuwirken. Der gehäuseeinrichtungsseitige zweite Befestigungsabschnitt 2.2.2 ist sonach eingerichtet, mit einem bzw. dem korrespondierenden sensoreinrichtungsseitigen zweiten Befestigungsabschnitt 3.2.2 unter Ausbildung der Kegelpressverbindung zusammenzuwirken. Ersichtlich ist der Befestigungsbereich 2.2 der Gehäuseeinrichtung 2 an einem, gegebenenfalls auch als Gehäusekörper zu bezeichnenden, Grundkörper 2.3 der Gehäuseeinrichtung 2 ausgebildet. Die Gehäuseeinrichtung 2 ist sonach durch einen, z. B. metallischen, Grundkörper 2.3 gebildet bzw. umfasst einen solchen. Der Grundkörper 2.3 weist in dem Ausführungsbeispiel eine hohlzylinderartige bzw. -förmige Grundform auf. Insbesondere weist der Befestigungsbereich 2.2 der Gehäuseeinrichtung 2 eine hohlzylinderartige bzw. -förmige Grundform auf.

Die Sensoreinrichtung 3 weist einen, gegebenenfalls auch als Befestigungseinrichtung zu bezeichnenden bzw. zu erachtenden, Befestigungsbereich 3.2 zur Befestigung der Sensoreinrichtung 3 an der Gehäuseeinrichtung 2, und umgekehrt, auf. Der Befestigungsbereich 3.2 ist im Allgemeinen konfiguriert, um eine mechanisch ausgesprochen stabile Befestigung der Sensoreinrichtung 3 an der Gehäuseeinrichtung 2, und umgekehrt, zu realisieren. Der Befestigungsbereich 3.2 kann an einem flanschartigen Abschnitt 3.4 der Sensoreinrichtung 3 angeordnet oder ausgebildet sein. Die Besonderheit des Befestigungsbereichs 3.2 ergibt sich - analog dem Befestigungsbereich 2.2 der Gehäuseeinrichtung 2 - daraus, dass dieser gesonderte geometrisch-konstruktiv bzw. funktional unterschiedlich konfigurierte Befestigungsabschnitte 3.2.1, 3.2.2 umfasst. Konkret umfasst der Befestigungsbereich 3.2 einen ersten Befestigungsabschnitt 3.2.1 zur Ausbildung einer Gewindeverbindung mit einem korrespondierenden ersten Befestigungsabschnitt 2.2.1 der Gehäuseeinrichtung 2 und einen zu dem ersten Befestigungsabschnitt 3.2.1 gesonderten zweiten Befestigungsabschnitt 3.2.2 zur Ausbildung einer Kegelpressverbindung, mit einem korrespondierenden zweiten Befestigungsabschnitt 2.2.2 der Gehäuseeinrichtung 2. Der sensoreinrichtungsseitige erste Befestigungsabschnitt 3.2.1 ist sonach eingerichtet, mit einem bzw. dem korrespondierenden gehäuseeinrichtungsseitigen ersten Befestigungsabschnitt 2.2.1 unter Ausbildung einer Gewindeverbindung bzw. -befestigung zusammenzuwirken. Der sensoreinrichtungsseitige zweite Befestigungsabschnitt 3.2.2 ist sonach eingerichtet, mit einem bzw. dem korrespondierenden gehäuseeinrichtungsseitigen zweiten Befestigungsabschnitt 2.2.2 unter Ausbildung der Kegelpressverbindung zusammenzuwirken.

Der Befestigungsbereich 3.2 der Sensoreinrichtung 3 ist an einem, gegebenenfalls auch als Sensorkörper zu bezeichnenden, Grundkörper 3.3 der Sensoreinrichtung 3 ausgebildet. Die Sensoreinrichtung 3 ist sonach durch einen, z. B. metallischen oder keramischen, Grundkörper 3.3 gebildet bzw. umfasst einen solchen. Der Grundkörper 3.3 weist eine zylinderartige bzw. - förmige Grundform auf. Insbesondere weist der Befestigungsbereich 3.2 der Sensoreinrichtung 3 eine zylinderartige bzw. -förmige Grundform aufweisen.

Durch das aufgrund aufeinander abgestimmter Konfigurationen mögliche Zusammenwirken jeweiliger gehäuseeinrichtungsseitiger und sensoreinrichtungsseitiger Befestigungsbereiche 2.2, 3.2, d. h. insbesondere jeweiliger gehäuseeinrichtungsseitiger und sensoreinrichtungsseitiger erster und zweiter Befestigungsabschnitte 2.2.1, 2.2.2, 3.2.1 3.2.2, lässt sich eine Kombination einer Gewinde- und einer Pressbefestigung, d. h. insbesondere einer Kegelpressbefestigung, und sonach insgesamt ein kombiniertes Befestigungsprinzip realisieren, was, insbesondere im Vergleich zu einer einfachen Schraubbefestigung, eine sehr stabile Befestigung der Sensoreinrichtung 3 an der Gehäuseeinrichtung 2, und umgekehrt, ermöglicht.

Dies gilt insbesondere vor dem Hintergrund, dass die stabartige bzw. -förmige Sensoreinrichtung 3 typischerweise einen Länge zu Durchmesserverhältnis von wenigstens 2:1, insbesondere wenigstens 3:1, weiter insbesondere wenigstens 4:1, weiter insbesondere wenigstens 5:1, weiter insbesondere wenigstens 6:1, weiter insbesondere wenigstens 7:1, weiter insbesondere wenigstens 8:1, weiter insbesondere wenigstens 9:1, weiter insbesondere wenigstens 10:1, weiter insbesondere wenigstens 11:1, weiter insbesondere wenigstens 12:1, weiter insbesondere wenigstens 13:1, weiter insbesondere wenigstens 14:1, weiter insbesondere wenigstens 15:1, aufweist. Die Länge der Sensoreinrichtung 3 kann sonach deutlich größer sein als deren Durchmesser bzw. Querschnitt, was eine stabile Befestigung, wie eingangs angedeutet, grundsätzlich erschwert. Durch das vorstehend beschriebene Befestigungsprinzip der Sensorvorrichtung 1 ist eine ausgesprochen stabile Befestigung jedoch auch bei derart schwierigen Befestigungsvoraussetzungen realisierbar.

Durch das aufgrund aufeinander abgestimmter Konfigurationen mögliche Zusammenwirken jeweiliger gehäuseeinrichtungsseitiger und sensoreinrichtungsseitiger Befestigungsbereiche 2.2, 3.2, d. h. insbesondere jeweiliger gehäuseeinrichtungsseitiger und sensoreinrichtungsseitiger erster und zweiter Befestigungsabschnitte 2.2.1, 2.2.2, 3.2.1 3.2.2, eröffnet auch eine gewisse Variabilität der Stabilität der Befestigung, denn die durch das Zusammenwirken der jeweiligen zweiten Befestigungsabschnitte 2.2.2, 3.2.2 realisierte Pressverbindung kann gegebenenfalls über das Verschrauben der jeweiligen ersten Befestigungsabschnitte 2.2.1, 3.2.1 und das damit einhergehende Ineinandergreifen der jeweiligen ersten Befestigungsabschnitte gezielt beeinflusst werden, als die zur Realisierung der Pressverbindung auf die jeweiligen zweiten Befestigungsabschnitte 2.2.2, 3.2.2 wirkenden Kräfte durch das Anziehen der Schraubbefestigung der jeweiligen ersten Befestigungsabschnitte 2.2.1, 3.2,1 gezielt beeinflusst werden können.

Ersichtlich weist der Grundkörper 2.3 der Gehäuseeinrichtung 2 eine Symmetrie- oder Zentralachse A1 auf, bei welcher es sich um die bzw. eine Längsachse des Grundkörpers 2.3 bzw. der Gehäuseeinrichtung 2 handeln kann. Der Befestigungsbereich 2.2 der Gehäuseeinrichtung 2 ist in dem Ausführungsbeispiel im Bereich des der Sensoreinrichtung 3 zugewandten freien Endes des Grundkörpers 2.3 angeordnet oder ausgebildet.

Ersichtlich ist der zweite Befestigungsabschnitt 2.2.2 des Befestigungsbereichs 2.2 der Gehäuseeinrichtung 2 im Bereich des der Sensoreinrichtung 3 zugewandten freien Endes des Grundkörpers 2.3 der Gehäuseeinrichtung 2 angeordnet oder ausgebildet sein und der erste Befestigungsabschnitt 2.2.1 des Befestigungsbereichs 2.2 der Gehäuseeinrichtung 2 im Verhältnis zu dem freien Ende in Richtung eines anderen freien Endes versetzt angeordnet oder ausgebildet sein. Mithin ist der zweite Befestigungsabschnitt 2.2.2 in dem Ausführungsbeispiel unmittelbar an dem der Sensoreinrichtung 3 zugewandten freien Ende des Grundkörpers 2.3 angeordnet oder ausgebildet; der zweite Befestigungsabschnitt 2.2.2 bildet sonach das der Sensoreinrichtung 3 zugewandte freie Ende des Grundkörpers 2.3 der Gehäuseeinrichtung 2.

Auch der Grundkörper 3.3 der Sensoreinrichtung 3 weist eine Symmetrie- oder Zentralachse A2 auf, bei welcher es sich um die bzw. eine Längsachse des Grundkörpers bzw. der Sensoreinrichtung 3 handeln kann. Der Befestigungsbereich 3.2 der Sensoreinrichtung 3 ist in dem Ausführungsbeispiel im Bereich des der Gehäuseeinrichtung 2 zugewandten freien Endes des Grundkörpers 3.3 angeordnet oder ausgebildet.

Ersichtlich ist der erste Befestigungsabschnitt 3.2.1 des Befestigungsbereichs 3.2 der Sensoreinrichtung 3 im Bereich des der Gehäuseeinrichtung 2 zugewandten freien Endes des Grundkörpers 3.3 der Sensoreinrichtung 3 angeordnet oder ausgebildet und der zweite Befestigungsabschnitt 3.2.2 des Befestigungsbereichs 3.2 der Sensoreinrichtung 3 im Verhältnis zu dem freien Ende in Richtung eines anderen freien Endes versetzt angeordnet oder ausgebildet. Mithin ist der erste Befestigungsabschnitt in dem Ausführungsbeispiel unmittelbar an dem der Gehäuseeinrichtung 2 zugewandten freien Ende des Grundkörpers 3.3 angeordnet oder ausgebildet; der erste Befestigungsabschnitt bildet sonach das der Gehäuseeinrichtung 2 zugewandte freie Ende des Grundkörpers 3.3. der Sensoreinrichtung 3.

Wenngleich in den Fig. nicht gezeigt, ist es jedoch auch denkbar, dass der Befestigungsbereich 3.2 der Sensoreinrichtung 3 beabstandet zu einem freien Ende des Grundkörpers 3.3 angeordnet oder ausgebildet ist. Dies gilt insbesondere für Konfigurationen, in welchen die Sensoreinrichtung 3 im Montagezustand der Sensorvorrichtung 1 mit einem freien Ende über den Befestigungsbereich 2.2 der Gehäuseeinrichtung 2 hinaus weiter in die Gehäuseeinrichtung 2 hineinragt bzw. eintaucht.

Wie erwähnt, sind die jeweiligen ersten Befestigungsabschnitte 2.2.1, 3.2.1 der Befestigungsbereiche 2.2, 3.2 der Gehäuseeinrichtung 2 und der Sensoreinrichtung 3 zur Ausbildung einer Gewindeverbindung bzw. -befestigung eingerichtet. Der erste Befestigungsabschnitt 2.2.1 des Befestigungsbereichs 2.2 der Gehäuseeinrichtung 2 ist in dem Ausführungsbeispiel durch ein Innengewinde oder einen Innengewindeabschnitt gebildet. Der erste Befestigungsabschnitt 3.2.1 des Befestigungsbereichs 3.2 der Sensoreinrichtung 3 ist in dem Ausführungsbeispiel durch ein korrespondierendes Außengewinde oder einen korrespondierenden Außengewindeabschnitt gebildet. Bei den jeweiligen Innen- bzw. Außengewinden kann es sich gegebenenfalls um Feingewinde handeln.

Wie ebenso erwähnt, sind die jeweiligen zweiten Befestigungsabschnitte 2.2.2, 3.2.2 der Befestigungsbereiche 2.2, 3.2 der Gehäuseeinrichtung 2 und der Sensoreinrichtung 3 zur Ausbildung einer Kegelpressverbindung eingerichtet. Der zweite Befestigungsabschnitt 2.2.2 des Befestigungsbereichs 2.2 der Gehäuseeinrichtung 2 ist in dem Ausführungsbeispiel durch sich in axialer Richtung bezüglich der Symmetrie- oder Zentralachse A1 der Gehäuseeinrichtung 2 bzw. des Grundkörpers 2.3 aufweitende Kegelflächen gebildet. Ersichtlich stellen die Kegelflächen in den (längs)geschnittenen Ansichten gemäß den Fig. sich in axialer Richtung bezüglich der Symmetrie- oder Zentralachse A1 in Richtung des mit dem Befestigungsbereich 2.2 versehenen freien Endes der Gehäuseeinrichtung 2 aufweitende Schrägflächen dar. Der zweite Befestigungsabschnitt 3.2.2 des Befestigungsbereichs 3.2 der Sensoreinrichtung 3 ist in dem Ausführungsbeispiel durch korrespondierende, sich in axialer Richtung bezüglich der Symmetrie- oder Zentralachse A2 der Sensoreinrichtung 3 bzw. des Grundkörpers 3.3 zulaufende Kegelflächen gebildet. Ersichtlich stellen die Kegelflächen in den (längs)geschnittenen Ansichten gemäß den Fig. sich in axialer Richtung bezüglich der Symmetrie- oder Zentralachse A2 in Richtung des mit dem Befestigungsbereich 3.2 versehenen freien Endes der Sensoreinrichtung 3 zulaufende Schrägflächen dar.

Die jeweiligen Kegelflächen der zweiten Befestigungsabschnitte 2.2.2, 3.2.2 der Gehäuseeinrichtung 2 und/oder der Sensoreinrichtung 3 können auch als Kegelstumpfflächen bezeichnet bzw. erachtet werden.

Der halbe Öffnungswinkel eines durch entsprechende Kegelflächen definierten Kegels der Gehäuseeinrichtung 2 und/oder der Sensoreinrichtung 3 kann im Allgemeinen in einem Bereich zwischen 0,1 und 90° liegen. Konkret kann der halbe Öffnungswinkel eines durch entsprechende Kegelflächen definierten Kegels der Gehäuseeinrichtung 2 und/oder der Sensoreinrichtung 3 beispielsweise in einem Bereich zwischen 5 und 45°, insbesondere in einem Bereich zwischen 10 und 35°, weiter insbesondere zwischen 15 und 25°, liegen. Die jeweiligen halben Öffnungswinkel der gehäuseeinrichtungsseitigen und sensoreinrichtungsseitigen Kegelflächen sind, wie die Fig. beispielhaft zeigen, typischerweise kongruent.

Wie erwähnt, sind die jeweiligen ersten und zweiten Befestigungsabschnitte 2.2.1, 2.2.2, 3.2.1, 3.2.2 als jedenfalls in geometrisch-konstruktiver Hinsicht gesonderte Abschnitte der jeweiligen Befestigungsbereiche 2.2, 3.2, der Gehäuse- und Sensoreinrichtung 2, 3 zu erachten. Die jeweiligen ersten und zweiten Befestigungsabschnitte 2.2.1, 2.2.2, 3.2.1, 3.2.2 eines jeweiligen Befestigungsbereichs 2.2, 3.2 sind sonach räumlich voneinander abgrenzbar. In diesem Zusammenhang sind folgende Ausführungsformen beispielhaft denkbar:

Der erste Befestigungsabschnitt 2.2.1 des Befestigungsbereichs 2.2 der Gehäuseeinrichtung 2 kann in axialer Richtung bezüglich der Symmetrie- oder Zentralachse A1 der Gehäuseeinrichtung 2, insbesondere unmittelbar, an den zweiten Befestigungsabschnitt 2.2.2 des Befestigungsbereichs 2.2 der Gehäuseeinrichtung 2 anschließen. Wie erwähnt, bildet der zweite Befestigungsabschnitt 2.2.2 das der Sensoreinrichtung 3 zugewandte freie Ende der Gehäuseeinrichtung 2. Gleichermaßen ist der erste Befestigungsabschnitt 3.2.1 des Befestigungsbereichs 3.2 der Sensoreinrichtung 3 in axialer Richtung bezüglich der Symmetrie- oder Zentralachse A2 der Sensoreinrichtung 3, insbesondere unmittelbar, an den zweiten Befestigungsabschnitt 3.2.2 des Befestigungsbereichs 3.2 der Sensoreinrichtung 3 anschließen. Wie erwähnt, bildet der erste Befestigungsabschnitt 3.2.1 des Befestigungsbereichs 3.2 der Sensoreinrichtung 3 das der Gehäuseeinrichtung 2 zugewandte freie Ende der Sensoreinrichtung 3.

Es ist ebenso denkbar ist, dass sich der erste Befestigungsabschnitt 2.2.1 des Befestigungsbereichs 2.2 der Gehäuseeinrichtung 2 unter Zwischenschaltung eines sich bezüglich der Symmetrie- oder Zentralachse A1 der Gehäuseeinrichtung 2 radial nach innen erstreckenden dritten Befestigungsabschnitts (nicht gezeigt) an den zweiten Befestigungsabschnitt 2.2.2 anschließt. Zwischen dem das freie Ende der Gehäuseeinrichtung 2 bildenden zweiten Befestigungsabschnitt 2.2.2 und dem ersten Befestigungsabschnitt 2.2.1 kann sonach ein dritter Befestigungsabschnitt angeordnet oder ausgebildet sein. Der dritte Befestigungsabschnitt kann sich um ein gewisses Maß, z. B. um ein Maß aus dem Bereich zwischen 0,01 und 0,1 mm, in radialer Richtung nach innen erstrecken.

Gleichermaßen könnte sich der erste Befestigungsabschnitt 3.2.1 des Befestigungsbereichs 3.2 der Sensoreinrichtung 3 unter Zwischenschaltung eines sich bezüglich der Symmetrie- oder Zentralachse A2 der Sensoreinrichtung 3 radial nach innen erstreckenden dritten Befestigungsabschnitts 3.2.3 an den zweiten Befestigungsabschnitt 3.2.2 anschließen. Zwischen dem das freie Ende der Sensoreinrichtung 3 bildenden ersten Befestigungsabschnitt 3.2.1 und dem zweiten Befestigungsabschnitt 3.2.2 kann sonach ein dritter Befestigungsabschnitt (nicht gezeigt) angeordnet oder ausgebildet sein. Der dritte Befestigungsabschnitt kann sich um ein gewisses Maß, z. B. um ein Maß aus dem Bereich zwischen 0,01 und 0,1 mm, in radialer Richtung nach innen erstrecken.

Durch die - analog den jeweiligen ersten und zweiten Befestigungsabschnitten 2.2.1, 2.2.2, 3.2.1, 3.2.2 - typischerweise korrespondierenden dritten Befestigungsabschnitte kann gegebenenfalls eine Verliersicherung realisiert sein, welche, etwa im Rahmen der Herstellung der Befestigung, ein unerwünschtes Herausfallen der Sensoreinrichtung 3 aus der Gehäuseeinrichtung 2 verhindert.

Der flanschartige bzw. -förmige Abschnitt 2.4 des Grundkörpers 2.3 der Gehäuseeinrichtung 2 kann, etwa durch eine geeignete Wandstärke(nreduzierung) elastisch-federnde Eigenschaften aufweisen. Derart kann die Montage der Sensorvorrichtung 1, welche typischerweise durch Einstecken der Sensoreinrichtung 3 in die Gehäuseeinrichtung 2 und Verschrauben der jeweiligen ersten Befestigungsabschnitte 2.2.1, 3.2.1 erfolgt, vereinfacht werden. Der flanschartige bzw. -förmige Abschnitt des Grundkörpers 2.3 der Gehäuseeinrichtung 2 kann ferner außenumfangsseitig mit einer nicht näher bezeichneten Befestigungsschnittstelle zur Befestigung der Gehäuseeinrichtung 2, gegebenenfalls nebst daran befestigter Sensoreinrichtung 3, an einer korrespondierenden Befestigungsschnittstelle eines Behälters ausgebildet sein. Bei einer entsprechenden Befestigungsschnittstelle kann es sich z. B. um ein Außengewinde handeln.

Durch die Verwendung der Sensorvorrichtung 1 bzw. einer die Sensorvorrichtung 1 umfassenden Vorrichtung zur Ermittlung des Füllstands eines Mediums in einem Behälter von kann ein Verfahren zur Ermittlung des Füllstands eines Mediums in einem Behälter implementiert sein bzw. werden.

## Patentansprüche

1. Sensorvorrichtung (1) zur Erfassung von den Füllstand eines Mediums in einem Behälter beschreibenden Füllstandsinformationen, umfassend:
eine Gehäuseeinrichtung (2) und eine an der Gehäuseeinrichtung (2) befestigbare oder befestigte Sensoreinrichtung (3) zur Erfassung von den Füllstand eines Mediums in einem Behälter beschreibenden Füllstandsinformationen, wobei
die Gehäuseeinrichtung (2) einen Befestigungsbereich (2.2) zur Befestigung der Sensoreinrichtung (3) aufweist, welcher einen ersten Befestigungsabschnitt (2.2.1) zur Ausbildung einer Gewindeverbindung mit einem korrespondierenden ersten Befestigungsabschnitt (3.2.1) der Sensoreinrichtung (3) und einen zu dem ersten Befestigungsabschnitt (2.2.1) gesonderten zweiten Befestigungsabschnitt (2.2.2) zur Ausbildung einer Kegelpressverbindung mit einem korrespondierenden zweiten Befestigungsabschnitt (3.2.2) der Sensoreinrichtung (3) umfasst; und
die Sensoreinrichtung (3) einen Befestigungsbereich (3.2) zur Befestigung der Gehäuseeinrichtung (2) aufweist, welcher den ersten Befestigungsabschnitt (3.2.1) zur Ausbildung der Gewindeverbindung mit dem korrespondierenden ersten Befestigungsabschnitt (2.2.1) der Gehäuseeinrichtung (2) und den zu dem ersten Befestigungsabschnitt (3.2.1) gesonderten zweiten Befestigungsabschnitt (3.2.2) zur Ausbildung der Kegelpressverbindung mit dem korrespondierenden zweiten Befestigungsabschnitt (2.2.2) der Gehäuseeinrichtung (2) umfasst,
wobei der zweite Befestigungsabschnitt (2.2.2) des Befestigungsbereichs (2.2) der Gehäuseeinrichtung (2) in einer längsgeschnittenen Ansicht der Gehäuseeinrichtung (2) durch sich in axialer Richtung bezüglich einer Symmetrie- oder Zentralachse des Grundkörpers der Gehäuseeinrichtung (2) in Richtung des mit dem Befestigungsbereich (2.2) versehenen Endes der Gehäuseeinrichtung (2) aufweitende Schrägflächen gebildet ist;
wobei der zweite Befestigungsabschnitt (3.2.2) des Befestigungsbereichs (3.2) der Sensoreinrichtung (3) in einer längsgeschnittenen Ansicht der Sensoreinrichtung (3) durch sich in axialer Richtung bezüglich einer Symmetrie- oder Zentralachse des Grundkörpers der Sensoreinrichtung (3) in Richtung des mit dem Befestigungsbereich (3.2) versehenen Endes der Sensoreinrichtung (3) zulaufende Schrägflächen gebildet ist.

2. Sensorvorrichtung nach Anspruch 1, **dadurch gekennzeichnet, dass** die Gehäuseeinrichtung (2) einen eine Symmetrie- oder Zentralachse (A1) aufweisenden Grundkörper (3) aufweist, wobei der Befestigungsbereich (2.2) im Bereich eines freien Endes des Grundkörpers (2.3) angeordnet oder ausgebildet ist; und/oder
die Sensoreinrichtung (3) einen eine Symmetrie- oder Zentralachse (A2) aufweisenden Grundkörper (3.3) aufweist, wobei der Befestigungsbereich (3.2) im Bereich eines freien Endes des Grundkörpers (3.3) angeordnet oder ausgebildet ist.

3. Sensorvorrichtung nach Anspruch 2, **dadurch gekennzeichnet, dass** der erste Befestigungsabschnitt (2.2.1) des Befestigungsbereichs (2.2) der Gehäuseeinrichtung (2) im Bereich des freien Endes des Grundkörpers (2.3) der Gehäuseeinrichtung (2) angeordnet oder ausgebildet ist und der zweite Befestigungsabschnitt (2.2.2) des Befestigungsbereichs (2.2) der Gehäuseeinrichtung (2) im Verhältnis zu dem freien Ende in Richtung eines anderen freien Endes versetzt angeordnet oder ausgebildet ist, und/oder der zweite Befestigungsabschnitt (3.2.2) des Befestigungsbereichs (3.2) der Sensoreinrichtung (3) im Bereich des freien Endes des Grundkörpers (3.3) der Sensoreinrichtung (3) angeordnet oder ausgebildet ist und der erste Befestigungsabschnitt (3.2.1) des Befestigungsbereichs (3.2) der Sensoreinrichtung (3) im Verhältnis zu dem freien Ende in Richtung eines anderen freien Endes versetzt angeordnet oder ausgebildet ist.

4. Sensorvorrichtung nach einem der vorhergehenden Ansprüche, **dadurch gekennzeichnet, dass** der erste Befestigungsabschnitt (2.2.1) des Befestigungsbereichs (2.2) der Gehäuseeinrichtung (2) durch ein Innengewinde oder einen Innengewindeabschnitt gebildet ist, und der erste Befestigungsabschnitt (3.2.1) des Befestigungsbereichs (3.2) der Sensoreinrichtung (3) durch ein Außengewinde oder einen Außengewindeabschnitt gebildet.

5. Sensorvorrichtung nach einem der vorhergehenden Ansprüche, **dadurch gekennzeichnet, dass** der zweite Befestigungsabschnitt (2.2.2) des Befestigungsbereichs (2.2) der Gehäuseeinrichtung (2) durch einen sich in axialer Richtung bezüglich einer Symmetrie- oder Zentralachse (A1) der Gehäuseeinrichtung (2) aufweitende Kegelflächen gebildet ist, und der zweite Befestigungsabschnitt (3.2.2) des Befestigungsbereichs (3.2) der Sensoreinrichtung (3) durch einen sich in axialer Richtung bezüglich einer Symmetrie- oder Zentralachse (A2) der Sensoreinrichtung (3) zulaufende Kegelflächen gebildet ist.

6. Sensorvorrichtung nach Anspruch 6, **dadurch gekennzeichnet, dass** der halbe Öffnungswinkel eines durch Kegelflächen definierten Kegels der Gehäuseeinrichtung (2) und/oder der Sensoreinrichtung (3) in einem Bereich zwischen 0,1 und 90°, insbesondere in einem Bereich zwischen 5 und 45°, insbesondere in einem Bereich zwischen 10 und 35°, liegt.

7. Sensorvorrichtung nach einem der vorhergehenden Ansprüche, **dadurch gekennzeichnet, dass** der erste Befestigungsabschnitt (2.2.1) des Befestigungsbereichs (2.2) der Gehäuseeinrichtung (2), insbesondere in axialer Richtung bezüglich einer Symmetrie- oder Zentralachse (A1) der Gehäuseeinrichtung (2), insbesondere unmittelbar, an den zweiten Befestigungsabschnitt (2.2.2) des Befestigungsbereichs (2.2) der Gehäuseeinrichtung (2) anschließt, und/oder
der erste Befestigungsabschnitt (3.2.1) des Befestigungsbereichs (3.2) der Sensoreinrichtung (3), insbesondere in axialer Richtung bezüglich einer Symmetrie- oder Zentralachse (A2) der Sensoreinrichtung (3), insbesondere unmittelbar, an den zweiten Befestigungsabschnitt (3.2.2) des Befestigungsbereichs (3.2) der Sensoreinrichtung (3) anschließt.

8. Sensorvorrichtung nach einem der vorhergehenden Ansprüche, **dadurch gekennzeichnet, dass** der erste Befestigungsabschnitt (2.2.1) des Befestigungsbereichs (2.2) der Gehäuseeinrichtung (2) unter Zwischenschaltung eines sich bezüglich einer Symmetrie- oder Zentralachse (A1) der Gehäuseeinrichtung (2) radial nach innen erstreckenden dritten Befestigungsabschnitts an den zweiten Befestigungsabschnitt (2.2.2) des Befestigungsbereichs (2.2) der Gehäuseeinrichtung (2) anschließt, und/oder
der erste Befestigungsabschnitt (3.2.1) des Befestigungsbereichs (3.2) der Sensoreinrichtung (3) unter Zwischenschaltung eines sich bezüglich einer Symmetrie- oder Zentralachse (A2) der Sensoreinrichtung (3) radial nach innen erstreckenden dritten Befestigungsabschnitts an den zweiten Befestigungsabschnitt (3.2.2) des Befestigungsbereichs (3.2) der Sensoreinrichtung (3) anschließt.

9. Sensorvorrichtung nach einem der vorhergehenden Ansprüche, **dadurch gekennzeichnet, dass** der erste Befestigungsabschnitt (2.2.1) des Befestigungsbereichs (2.2) der Gehäuseeinrichtung (2) durch ein Innengewinde oder einen Innengewindeabschnitt gebildet ist.

10. Sensorvorrichtung nach einem der vorhergehenden Ansprüche, **dadurch gekennzeichnet, dass** der erste Befestigungsabschnitt (3.2.1) des Befestigungsbereichs (3.2) der Sensoreinrichtung (3) durch ein am freien Ende eines Grundkörpers der Sensoreinrichtung (3) angeordnetes oder ausgebildetes Außengewinde oder einen Außengewindeabschnitt gebildet ist.

11. Sensorvorrichtung nach einem der vorhergehenden Ansprüche, **dadurch gekennzeichnet, dass** der Befestigungsbereich (2.2) der Gehäuseeinrichtung (2) an einem flanschartigen Abschnitt der Gehäuseeinrichtung (2) angeordnet oder ausgebildet ist, wobei der flanschartige Abschnitt elastisch-federnde Eigenschaften aufweist.

12. Sensorvorrichtung nach einem der vorhergehenden Ansprüche, **dadurch gekennzeichnet, dass** die Sensoreinrichtung (3) eine Länge zu Durchmesser-Verhältnis von wenigstens 2:1, insbesondere wenigstens 3:1, weiter insbesondere wenigstens 4:1, weiter insbesondere wenigstens 5:1, weiter insbesondere wenigstens 6:1, weiter insbesondere wenigstens 7:1, weiter insbesondere wenigstens 8:1, weiter insbesondere wenigstens 9:1, weiter insbesondere wenigstens 10:1, weiter insbesondere wenigstens 11:1, weiter insbesondere wenigstens 12:1, weiter insbesondere wenigstens 13:1, weiter insbesondere wenigstens 14:1, weiter insbesondere wenigstens 15:1, aufweist.

13. Vorrichtung zur Ermittlung des Füllstands eines Mediums in einem Behälter, umfassend eine Sensorvorrichtung (1) nach einem der vorhergehenden Ansprüche und eine Auswerteeinrichtung (4), welche zur Auswertung der von der Sensoreinrichtung (3) der Sensorvorrichtung (1) lieferbaren bzw. gelieferten Sensorinformationen und zur Erzeugung von einen aktuellen oder künftigen Füllstand eines Mediums in dem jeweiligen Behälter beschreibenden Füllstandsinformationen eingerichtet ist.

## Claims

1. Sensor device (1) for detecting the level of a medium in a container descriptive level information, comprising:
a housing device (2) and a sensor device (3) attachable or attached to the housing device (2) for detecting the level of a medium in a container descriptive level information, wherein
The housing device (2) has a fastening region (2.2) for fastening the sensor device (3), which comprises a first fastening portion (2.2.1) for forming a threaded connection with a corresponding first fastening portion (3.2.1) of the sensor device (3) and a separate to the first fastening portion (2.2.1) second fastening portion (2.2.1) for forming a connection with a corresponding second fastening portion (3.2.2) of the sensor device (3); and
the sensor device (3) has a fastening region (3.2) for fastening the housing device (2), which comprises the first fastening portion (3.2.1) for forming the threaded connection with the corresponding first fastening portion (2.2.1) of the housing device (2) and the second fastening portion (3.2.2) separate from the first fastening portion (3.2.1) for forming the connection with the corresponding second fastening portion (2.2.2) of the housing device (2),
wherein the second mounting portion (2.2.2) of the housing device is designed to form a conical press connection with the second mounting portion (3.2.2) of the sensor device,
that the second fastening portion (2.2.2) of the fastening region (2.2) of the housing device (2) is formed in a longitudinally cut view of the housing device (2) by itself in the axial direction with respect to a symmetry or central axis of the base body of the housing device (2) in the direction of the end of the housing device (2) provided with the fastening region (2.2) expanding diagonal surfaces;
wherein the second fastening portion (3.2.2) of the fastening region (3.2) of the sensor device (3) is formed in a longitudinally cut view of the sensor device (3) by itself in the axial direction with respect to a symmetry or central axis of the base body of the sensor device (3) in the direction of the end of the sensor device (3) provided with the fastening region (3.2) inclined surfaces.

2. Sensor device according to claim 1, **characterized in that** the housing device (2) has a symmetry or central axis (A1) having a base body (3), wherein the fastening region (2.2) in the region of a free end of the base body (2.3) is arranged or formed; and/or
The sensor device (3) has a symmetry or central axis (A2) having a base body (3.3), wherein the fastening region (3.2) is arranged or formed in the region of a free end of the base body (3.3).

3. Sensor device according to claim 2, **characterized in that** the first fastening portion (2.2.1) of the fastening portion (2.2) of the housing device (2) is arranged or formed in the region of the free end of the base body (2.3) of the housing device (2) and the second fastening portion (2.2.2) of the fastening portion (2.2) of the housing device (2) is arranged or formed offset relative to the free end in the direction of another free end, and/or the second fastening portion (3.2.2) of the fastening portion (3.2) of the sensor device (3) is arranged or formed in the area of the free end of the base body (3.3) of the sensor device (3) and the first fastening portion (3.2.1) of the fastening portion (3.2) of the sensor device (3) is displaced in relation to the free end in the direction of another free end is arranged or formed.

4. Sensor device according to one of the preceding claims, **characterized in that** the first fastening portion (2.2.1) of the fastening portion (2.2) of the housing device (2) is formed by an internal thread or an internal thread portion, and the first fastening portion (3.2.1) of the fastening portion (3.2) of the sensor device (3) is formed by an external thread or an external thread portion.

5. Sensor device according to one of the preceding claims, **characterized in that** the second fastening portion (2.2.2) of the fastening region (2.2) of the housing device (2) is formed by a tapered surfaces extending in the axial direction with respect to a symmetry or central axis (A1) of the housing device (2), and the second fastening portion (3.2.2) of the fastening region (3.2) of the sensor device (3) is formed by a tapered surfaces in the axial direction with respect to a symmetry or central axis (A2) of the sensor device (3).

6. Sensor device according to claim 6, **characterized in that** the half opening angle of a cone defined by cone surfaces of the housing device (2) and / or the sensor device (3) is in a range between 0.1 and 90 °, in particular in a range between 5 and 45 °, in particular in a range between 10 and 35 °.

7. Sensor device according to one of the preceding claims, **characterized in that** the first mounting portion (2.2.1) of the mounting portion (2.2) of the housing device (2), in particular in the axial direction with respect to a symmetry or central axis (A1) of the housing device (2), in particular directly, connects to the second mounting portion (2.2.2) of the mounting portion (2.2) of the housing device (2), and / or
The first fastening portion (3.2.1) of the fastening region (3.2) of the sensor device (3), in particular in the axial direction with respect to a symmetry or central axis (A2) of the sensor device (3), in particular directly, connects to the second fastening portion (3.2.2) of the fastening region (3.2) of the sensor device (3).

8. Sensor device according to one of the preceding claims, **characterized in that** the first fastening portion (2.2.1) of the fastening portion (2.2) of the housing device (2) connects to the second fastening portion (2.2.2) of the fastening portion (2.2) of the housing device (2) radially extending inwardly with respect to a symmetry or central axis (A1) of the housing device (2), and/or
The first mounting portion (3.2.1) of the mounting portion (3.2) of the sensor device (3) is connected to the second mounting portion (3.2.2) of the mounting portion (3.2) of the sensor device (3) by interconnecting a third mounting portion radially extending inwards with respect to a symmetry or central axis (A2) of the sensor device (3).

9. Sensor device according to one of the preceding claims, **characterized in that** the first fastening portion (2.2.1) of the fastening portion (2.2) of the housing device (2) is formed by an internal thread or an internal thread portion.

10. Sensor device according to one of the preceding claims, **characterized in that** the first fastening portion (3.2.1) of the fastening region (3.2) of the sensor device (3) is formed by an external thread or an external thread portion arranged or formed at the free end of a base body of the sensor device (3).

11. Sensor device according to one of the preceding claims, **characterized in that** the mounting region (2.2) of the housing device (2) is arranged or formed on a flange-like portion of the housing device (2), wherein the flange-like portion has elastic-sprung properties.

12. Sensor device according to one of the preceding claims, **characterized in that** the sensor device (3) has a length to diameter ratio of at least 2:1, in particular at least 3:1, further in particular at least 4:1, further in particular at least 5:1, further in particular at least 6:1, further in particular at least 7:1, further in particular at least 8:1, further in particular at least 9:1, further in particular at least 10:1, further in particular at least 11:1, further in particular at least 12:1, further in particular at least 13:1, further in particular at least 14:1, further in particular at least 15:1.

13. Device for determining the level of a medium in a container, comprising a sensor device (1) according to one of the preceding claims and an evaluation device (4), which is configured for evaluating the sensor information provided or delivered by the sensor device (3) of the sensor device (1) and for generating a current or future level of a medium in the respective container descriptive level information.

## Revendications

1. Dispositif de détection (1) pour la détection du niveau d'un milieu dans un récipient contenant des informations de niveau descriptives, comprenant:
un dispositif de boîtier (2) et un dispositif de détection (3) qui peut être fixé ou fixé au dispositif de boîtier (2) pour détecter le niveau d'un milieu dans un récipient;
le dispositif du boîtier (2) comporte une zone de fixation (2.2) pour la fixation du dispositif du détection (3) comprenant une première section de fixation (2.2.1) pour la formation d'une connexion filetée avec une première section de fixation correspondante (3.2.1) du dispositif du détection (3) et une deuxième section de fixation (2.2.1) distincte de la première section de fixation (2.2.1) pour la formation d'une connexion avec une deuxième section de fixation correspondante (3.2.2) du dispositif du détection (3); et
le dispositif de détection (3) comporte une zone de fixation (3.2) pour la fixation du dispositif du boîtier (2) comprenant la première section de fixation (3.2.1) pour la formation de la connexion filetée avec la première section de fixation correspondante (2.2.1) du dispositif du boîtier (2) et la deuxième section de fixation (3.2.2) séparée de la première section de fixation (3.2.1) pour la formation de la connexion avec la deuxième section de fixation correspondante (2.2.2) du dispositif du boîtier (2),
où la deuxième section de fixation (2.2.2) du dispositif de boîtier est réalisée pour former une connexion cône-presse avec la deuxième section de fixation (3.2.2) du dispositif de détection,
que la deuxième section de fixation (2.2.2) de la zone de fixation (2.2) du dispositif de boîtier (2), dans une vue longitudinale du dispositif de boîtier (2), est formée par des surfaces inclinées axiales par rapport à un axe de symétrie ou central du corps de base du dispositif de boîtier (2) dans la direction de l'extrémité du dispositif de boîtier (2) dotée de la zone de fixation (2.2);
où la deuxième section de fixation (3.2.2) de la zone de fixation (3.2) du dispositif de détection (3), dans une vue longitudinale du dispositif de détection (3), est formée par des surfaces inclinées en direction axiale par rapport à un axe de symétrie ou central du corps de base du dispositif de détection (3) dans la direction de l'extrémité du dispositif de détection (3) donnant accès à la zone de fixation (3.2).

2. Dispositif de détection selon la revendication 1, **caractérisé en ce que** le dispositif de boîtier (2) présente un corps de base (3) ayant un axe de symétrie ou un axe central (A1), dans lequel la zone de fixation (2.2) est située ou formée dans la zone d'une extrémité libre du corps de base (2.3); et/ou
le dispositif de détection (3) comporte un corps de base (3.3) ayant un axe de symétrie ou un axe central (A2), la zone de fixation (3.2) étant située ou formée dans la zone d'une extrémité libre du corps de base (3.3).

3. Dispositif de détection selon la revendication 2, **caractérisé en ce que** la première section de fixation (2.2.1) de la zone de fixation (2.2) du dispositif de boîtier (2) est placée ou formée dans la zone de l'extrémité libre du corps de base (2.3) du dispositif de boîtier (2) et que la deuxième section de fixation (2.2.2) de la zone de fixation (2.2) du dispositif de boîtier (2) est placée ou formée décalée dans le sens d'une autre extrémité libre par rapport à l'extrémité libre, et/ou
la deuxième section de fixation (3.2.2) de la zone de fixation (3.2) du dispositif de détection (3) est située ou formée dans la zone de l'extrémité libre du corps de base (3.3) du dispositif de détection (3) et la première section de fixation (3.2.1) de la zone de fixation (3.2) du dispositif de détection (3) est décalée ou formée dans la direction d'une autre extrémité libre par rapport à l'extrémité libre.

4. Dispositif de détection selon l'une quelconque des revendications précédentes, **caractérisé en ce que** la première section de fixation (2.2.1) de la zone de fixation (2.2) du dispositif de boîtier (2) est formée par un filetage interne ou une section de filetage interne, et la première section de fixation (3.2.1) de la zone de fixation (3.2) du dispositif de détection (3) est formée par un filetage externe ou une section de filetage externe.

5. Dispositif de détection selon l'une quelconque des revendications précédentes, **caractérisé en ce que** la deuxième section de fixation (2.2.2) de la zone de fixation (2.2) du dispositif de boîtier (2) est formée par une surface conique s'élargissant dans le sens axial par rapport à un axe de symétrie ou central (A1) du dispositif de boîtier (2) et la deuxième section de fixation (3.2.2) de la zone de fixation (3.2) du dispositif de détection (3) est formée par une surface conique s'élargissant dans le sens axial par rapport à un axe de symétrie ou central (A2) du dispositif de détection (3).

6. Dispositif de détection selon la revendication 6, **caractérisé en ce que** le demi-angle d'ouverture d'un cône défini par des surfaces coniques du dispositif de boîtier (2) et/ou du dispositif de détection (3) se situe dans une plage comprise entre 0,1 et 90°, en particulier dans une plage comprise entre 5 et 45°, en particulier dans une plage comprise entre 10 et 35°.

7. Dispositif de détection selon l'une quelconque des revendications précédentes, **caractérisé en ce que** la première section de fixation (2.2.1) de la zone de fixation (2.2) du dispositif de boîtier (2), en particulier dans le sens axial par rapport à un axe de symétrie ou central (A1) du dispositif de boîtier (2), en particulier directement, se raccorde à la deuxième section de fixation (2.2.2) de la zone de fixation (2.2) du dispositif de boîtier (2), et/ou la première section de fixation (3.2.1) de la zone de fixation (3.2) du dispositif de détection (3), en particulier dans le sens axial par rapport à un axe de symétrie ou central (A2) du dispositif de détection (3), en particulier directement, se raccorde à la deuxième section de fixation (3.2.2) de la zone de fixation (3.2) du dispositif de détection (3).

8. Dispositif de détection selon l'une quelconque des revendications précédentes, **caractérisé en ce que** la première section de fixation (2.2.1) de la zone de fixation (2.2) du dispositif de boîtier (2) est reliée à la deuxième section de fixation (2.2.2) de la zone de fixation (2.2) du dispositif de boîtier (2) par l'intermédiaire d'une troisième section de fixation s'étendant radialement vers l'intérieur en ce qui concerne un axe de symétrie ou central (A1) du dispositif de boîtier (2), et/ou la première section de fixation (3.2.1) de la zone de fixation (3.2) du dispositif de détection (3) est reliée à la deuxième section de fixation (3.2.2) de la zone de fixation (3.2) du dispositif de détection (3) par l'intermédiaire d'une troisième section de fixation s'étendant radialement vers l'intérieur en ce qui concerne un axe de symétrie ou un axe central (A2) du dispositif de détection (3).

9. Dispositif de détection selon l'une quelconque des revendications précédentes, **caractérisé en ce que** la première section de fixation (2.2.1) de la zone de fixation (2.2) du dispositif de boîtier (2) est formée par un filetage interne ou une section de filetage interne.

10. Dispositif de détection selon l'une quelconque des revendications précédentes, **caractérisé en ce que** la première section de fixation (3.2.1) de la zone de fixation (3.2) du dispositif de détection (3) est formée par un filetage extérieur situé ou formé à l'extrémité libre d'un corps de base du dispositif de détection (3) ou par une section de filetage extérieur.

11. Dispositif de détection selon l'une quelconque des revendications précédentes, **caractérisé en ce que** la zone de fixation (2.2) du dispositif de boîtier (2) est disposée ou formée sur une section à charte de flasque du dispositif de boîtier (2), la section en forme de bride présentant des propriétés élastiques et élastiques.

12. Dispositif de détection selon l'une quelconque des revendications précédentes, **caractérisé en ce que** le dispositif de détection (3) présente une longueur par rapport au rapport diamètre d'au moins 2:1, en particulier d'au moins 3:1, en particulier d'au moins 4:1, en particulier d'au moins 5:1, en particulier d'au moins 6:1, en particulier d'au moins 7:1, en particulier d'au moins 8:1, en particulier d'au moins 9:1, en particulier d'au moins 10:1, en particulier d'au moins 11:1, en particulier d'au moins 12:1, en particulier d'au moins 13:1, en particulier d'au moins 14:1, en particulier d'au moins 15:1.

13. Dispositif de détermination du niveau d'un milieu dans un réservoir comprenant un dispositif de détection (1) selon l'une quelconque des revendications précédentes et un dispositif d'évaluation (4) qui est équipé pour l'évaluation des informations de détection disponibles ou fournies par le dispositif de détection (3) du dispositif de détection (1) et pour la génération d'un niveau actuel ou futur d'un milieu dans le réservoir respectif.
